# EUROPEAN PATENT APPLICATION

(11) **EP 4 645 651 A1**
(43) Date of publication of application: **05.11.2025**
(21) Application number: 25174173.2
(22) Date of filing: 05.05.2025
(51) Int. Cl.: H02J 50/00, H02J 50/20, H02J 50/80, H04W 52/00, H04W 84/12

(54) **WIRELESS COMMUNICATION METHOD FOR AMBIENT POWER**

(30) Priority: 03.05.2024 US 202463641969 P; 29.08.2024 US 202463688417 P; 02.05.2025 US 202519196748
(71) Applicant: MEDIATEK INC., Hsinchu City 30078 (TW)
(72) Inventor: CHEN, You-Wei, San Jose, CA 95134 (US); LIU, Jianhan, San Jose, CA 95134 (US); LU, Kai Ying, San Jose, CA 95134 (US); WANG, Chao-Chun, San Jose, CA 95134 (US); PARE, JR., Thomas Edward, San Jose, CA 95134 (US)
(74) Representative: Pfenning, Meinig & Partner mbB

(57) **Abstract**

A wireless communication method includes: transmitting, by a device (100, 200), a downlink (DL) physical layer protocol data unit (PPDU) (712) to an ambient power (AMP) non-access point (AP) station (STA) (100, 200), wherein the DL PPDU includes a trigger indication for triggering the AMP non-AP STA to perform an uplink (UL) transmission; and receiving, by the device, a backscattering UL transmission from the AMP non-AP STA in response to the trigger frame comprised in the DL PPDU.

## Description

### Field of the Invention

This invention relates to wireless communication methods capable of performing communications between an ambient power (AMP) access point (AP) and an AMP non-AP station (STA), and communications between the AMP AP, the AMP non-AP STA, and a backscattering source.

### Background of the Invention

The present disclosure is related to wireless communication, and more particularly, to methods for performing communications between an ambient power (AMP) access point (AP) and an AMP non-AP station (STA), and communications between the AMP AP, the AMP non-AP STA, and a backscattering source.

### Summary of the Invention

The invention aims at providing methods for performing communications between an AMP AP and an AMP non-AP STA, and communications between the AMP AP, the AMP non-AP STA, and a backscattering source, in order to address the above-mentioned issues. This is achieved by methods according to claims 1, 12 and 13, respectively. The dependent claims pertain to corresponding further developments and improvements.

As will be seen more clearly from the detailed description below, a wireless communication method comprises: transmitting, by a device, a downlink (DL) physical layer protocol data unit (PPDU) to an AMP non-AP station STA, wherein the DL PPDU comprises a trigger indication for triggering the AMP non-AP STA to perform an uplink (UL) transmission; and receiving, by the device, a backscattering UL transmission from the AMP non-AP STA in response to the trigger indication comprised in the DL PPDU.

In an embodiment, the wireless communication method further comprises: receiving, by the device, report information from the AMP non-AP STA, wherein the report information indicates a type of the AMP non-AP STA.

In an embodiment, the AMP non-AP STA is a backscattering-type AMP non-AP STA.

In an embodiment, the DL PPDU further comprises a backscatter-modulating waveform field, and a waveform of the backscatter-modulating waveform field is utilized by the AMP non-AP STA to generate the backscatter UL transmission.

In an embodiment, the backscatter-modulating waveform field is an excitation field for providing a power for the AMP non-AP STA.

In an embodiment, the waveform of the backscatter-modulating waveform field is a direct sequence spread spectrum (DSSS) waveform or an orthogonal frequency division multiplexing (OFDM) waveform.

In an embodiment, the DL PPDU further comprises an excitation field before an AMP package comprising the trigger indication or after the AMP package comprising the trigger indication, and the excitation field is utilized for providing a power for the AMP non-AP STA.

In an embodiment, the DL PPDU further comprises a spoofing preamble located at a beginning of the DL PPDU.

In an embodiment, each of the DL PPDU and the backscattering UL transmission comprises an AMP package; the AMP package utilizes an on-off keying (OOK) format, and the AMP package comprised in the DL PPDU carries the trigger indication.

In an embodiment, the AMP package comprises a physical (PHY) header, a media access control (MAC) header, and a frame body.

In an embodiment, a pattern of a synchronization (sync) field within the PHY header of the AMP package comprised in the DL PPDU is different from a pattern of a sync field within the PHY header of the AMP package comprised in the backscattering UL transmission.

In an embodiment, the pattern of the sync field within the PHY header of the AMP package comprised in the backscattering UL transmission acts as an UL transmission indicator.

In an embodiment, the wireless communication method further comprises: transmitting, by the device, a clear to send (CTS)-to-self frame in order to obtain a transmission opportunity (TXOP) before transmitting the DL PPDU to the AMP non-AP STA.

In an embodiment, the wireless communication method further comprises: in response to any UL PPDU not being received for an estimation period, transmitting, by the device, a frame to truncate or terminate the TXOP.

In an embodiment, a PPDU involved in the backscattering UL transmission is a trigger-based PPDU.

In an embodiment, the trigger indication is a trigger frame, and an indicator is carried in an MAC header of the AMP package comprised in the DL PPDU for indicating that the trigger frame is carried in the AMP package comprised in the DL PPDU.

In an embodiment, the pattern of the sync field within the PHY header of the AMP package comprised in the DL PPDU acts as the trigger indication.

In an embodiment, the wireless communication method further comprises: receiving a frame from an AMP AP, wherein the frame indicates the device to transmit the DL PPDU, and the device is an energizer.

In an embodiment, the DL PPDU further comprises a legacy preamble located at a beginning of the DL PPDU and reference symbols located after the legacy preamble and before a AMP package comprising the trigger indication, and the reference symbols are utilized for estimating an interference from the device.

According to an embodiment of the present disclosure, a wireless communication method is provided. The wireless communication method comprises: transmitting, by an AMP AP, a frame to a backscattering source for indicating the backscattering source to transmit a DL PPDU to an AMP non-AP STA; and receiving, by the AMP AP, a backscattering UL transmission in response to a trigger indication comprised in the DL PPDU, from the AMP non-AP STA.

According to an embodiment of the present disclosure, a wireless communication method is provided. The wireless communication method comprises: receiving, by an AMP non- AP STA, a DL PPDU, wherein the DL PPDU comprises a trigger indication for triggering the AMP non-AP STA to perform an UL transmission; and transmitting, by the AMP non-AP STA, a backscattering UL transmission to an AMP AP in response to the trigger indication comprised in the DL PPDU.

In an embodiment, the DL PPDU is from the AMP AP or an energizer; and in response to the DL PPDU being from the energizer, the DL PPDU is transmitted from the energizer based on an indication from the AMP AP.

In an embodiment, the wireless communication method further comprises: transmitting, by the AMP non-AP STA, report information, wherein the report information indicates that a type of the AMP non-AP STA is a backscattering-type AMP non-AP STA.

In an embodiment, the DL PPDU further comprises a backscatter-modulating waveform field, and a waveform of the backscatter-modulating waveform field is utilized by the AMP non-AP STA to generate the backscatter UL transmission.

In an embodiment, the backscatter-modulating waveform field is an excitation field for providing a power for the AMP non-AP STA.

In an embodiment, the DL PPDU further comprises an excitation field before an AMP package comprising the trigger frame, and the excitation field is utilized for providing a power for the AMP non-AP STA.

One of the benefits of the present disclosure is that, by the methods of the present disclosure, the PPDU UL and PPDU DL techniques can be applied to the backscattering-type AMP non-AP STA and the AMP AP, and can also be applied to the bi-static backscattering between the backscattering source, the backscattering-type AMP non-AP STA, and the AMP AP.

### Brief Description of the Drawings

In the following, the invention is further illustrated by way of example, taking reference to the following drawings. Thereof:
FIG. 1 is a diagram illustrating two wireless communication devices according to an embodiment of the present disclosure.
FIG. 2 is a diagram illustrating multiple coverage ranges for multiple transmissions according to an embodiment of the present disclosure.
FIG. 3 is a diagram illustrating a frame exchange between an AMP AP and an AMP STA according to an embodiment of the present disclosure.
FIG. 4 is a diagram illustrating a spoofing preamble and an AMP package transmitted from an AMP AP to an AMP STA according to an embodiment of the present disclosure.
FIG. 5 is a diagram illustrating a DL PPDU received by an AMP STA according to an embodiment of the present disclosure.
FIG. 6 is a diagram illustrating a powering and/or backscatter-modulating waveform field of the DL PPDU according to an embodiment of the present disclosure.
FIG. 7 is a diagram illustrating a frame exchange between an AMP AP and an STA according to another embodiment of the present disclosure.
FIG. 8 is a diagram illustrating a frame exchange between an AMP AP and an AMP STA according to still another embodiment of the present disclosure.
FIG. 9 is a diagram illustrating a bi-static backscattering between an AMP AP, an AMP STA, and a backscattering source according to an embodiment of the present disclosure.
FIG.10 is a diagram illustrating multiple coverage ranges for multiple transmissions according to an embodiment of the present disclosure.
FIG. 11 is a diagram illustrating a frame exchange between the AMP AP, the AMP STA, and the backscattering source shown in FIG. 9 according to an embodiment of the present disclosure.
FIG. 12 is a flow chart of the frame exchange shown in FIG. 11 according to an embodiment of the present disclosure.
FIG. 13 is a diagram illustrating a PPDU format for the bi-static backscattering according to an embodiment of the present disclosure.
FIG. 14 is a diagram illustrating a PPDU format for the bi-static backscattering according to another embodiment of the present disclosure.
FIG. 15 is a diagram illustrating a PPDU format for the bi-static backscattering according to still another embodiment of the present disclosure.
FIG. 16 is a flow chart of a wireless communication method according to an embodiment of the present disclosure.
FIG. 17 is a flow chart of a wireless communication method according to another embodiment of the present disclosure.
FIG. 18 is a flow chart of a wireless communication method according to still another embodiment of the present disclosure.
FIG. 19 is a diagram illustrating formats of a spoofing preamble according to an embodiment of the present disclosure.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...".

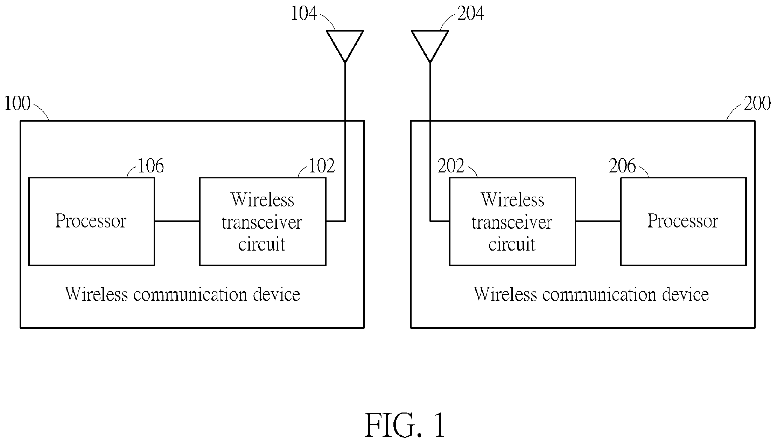

FIG. 1 is a diagram illustrating two wireless communication devices 100 and 200 according to an embodiment of the present disclosure. Each of the wireless communication devices 100 and 200 may be an ambient power (AMP) device complying with IEEE 802.11 11be standards or beyond versions. For example, one of the wireless communication devices 100 and 200 may be implemented as an AMP access point (AP), and another of the wireless communication devices 100 and 200 may be implemented as an AMP non-AP station (for brevity, hereinafter referred to as "AMP STA"), wherein both the AMP AP and the AMP STA may support AMP physical layer protocol data unit (PPDU) reception and transmission. The AMP STA may be an internet of things (IoT) device.

As shown in FIG. 1, the wireless communication device 100 may include a wireless transceiver circuit 102, an antenna 104, and a processor 106. Similarly, the wireless communication device 200 may include a wireless transceiver circuit 202, an antenna 204, and a processor 206. Under a situation that the wireless communication device 100 is implemented as an AMP AP, and the wireless communication device 200 is implemented as an AMP STA, the wireless transceiver circuit 102 may transmit a downlink (DL) PPDU to the wireless communication device 200, and the wireless transceiver circuit 202 may transmit an uplink (UL) PPDU to the wireless communication device 100.

The types of the AMP STA can be divided into three categories (e.g., a type-1 AMP STA, a type-2 AMP STA, and a type-3 AMP STA). For the type-1 AMP STA, the DL PPDU reception is similar to the existing DL PPDU reception compliant with IEEE 802.11 11ba standards, and the UL PPDU transmission complies with existing WLAN standards, such as IEEE 802.11 11b and 11n standards. That is, the type-1 AMP STA may be an AMP enabled STA, such as an STA capable of receiving AMP DL PPDUs (e.g., a high throughput (HT) STA, a non-HT STA, and a high efficiency (HE) STA). For the type-2 AMP STA, the DL PPDU reception is similar to the DL PPDU reception compliant with IEEE 802.11 11ba standards, wherein DL PPDUs may be AMP DL PPDUs with an on-off keying waveform, and the UL PPDU transmission adopts an on-off keying (OOK) format without a spoofing preamble (also referred to as a legacy preamble). That is, the type-2 AMP STA may be referred to as an active transmission-type AMP STA capable of supporting active transmission of AMP UL PPDUs, such as an AMP STA capable of receiving only AMP DL PPDUs and supporting active transmission of AMP UL PPDUs. The active transmission of the AMP UL PPDUs means that the AMP UL PPDU transmission is performed without using backscatter technology. For the type-3 AMP STA, the DL PPDU reception is similar to the DL PPDU reception compliant with IEEE 802.11 11ba standards, wherein DL PPDUs may be AMP DL PPDUs with the on-off keying waveform, and the UL PPDU transmission can be performed by modulating a received DL waveform. That is, the type-3 AMP STA may be a backscattering-type AMP STA capable of performing UL backscattering transmission, such as an AMP STA capable of receiving only AMP DL PPDUs and performing UL backscattering transmission by modulating the received DL waveform. The UL PPDU transmission can be performed by using a received DL waveform as a carrier. That is, the type-3 AMP STA can be a backscattering-type AMP STA. It should be noted that an AMP STA is required to transmit report information indicating a type of the AMP STA to an AMP AP. Since the focus of the present disclosure is on the type-3 AMP STA, the AMP STA will report its classification type as the backscattering-type to the AMP AP by transmitting the report information.

Under a situation that the backscattering-type AMP STA is focus on the AMP STA application with no power, the backscattering-type AMP STA will not adopt the enhanced distributed channel access (EDCA) mechanism to perform the backoff procedure for contending for the channel. As a result, the backscattering-type AMP STA of the present disclosure will adopt a trigger-based (TB) UL transmission. In addition, it is difficult to utilize a request to send (RTS)/clear to send (CTS) frame exchange mechanism for link protection. For example, since the RTS is transmitted with an orthogonal frequency division multiplexing (OFDM) format, the AMP STA cannot understand the RTS frame. As a result, a CTS-to-Self mechanism is utilized for link protection of a media access control (MAC) level of the backscattering-type AMP STA of the present disclosure. A CTS-to-Self frame with the OFDM format may be transmitted by the AMP AP in order to obtain a transmission opportunity (TXOP). The CTS-to-Self mechanism, however, may have some issues. For example, the timeout for the net allocation vector (NAV) is not defined in the standards. If an AMP package is transmitted with an OOK format and a narrow bandwidth, compared with a PPDU using a wide bandwidth and an OFDM format, an airtime of the AMP package will be long. Therefore, after a TXOP holder (e.g., the AMP AP) transmits the CTS-to-Self frame, if any TB UL PPDU is not received for an estimation period, the AMP AP may truncate or terminate the TXOP. For example, a control frame (CF)-end frame may be transmitted by the AMP AP in order to reset the NAV for terminating the TXOP. In this way, the third party STA can content the channel early.

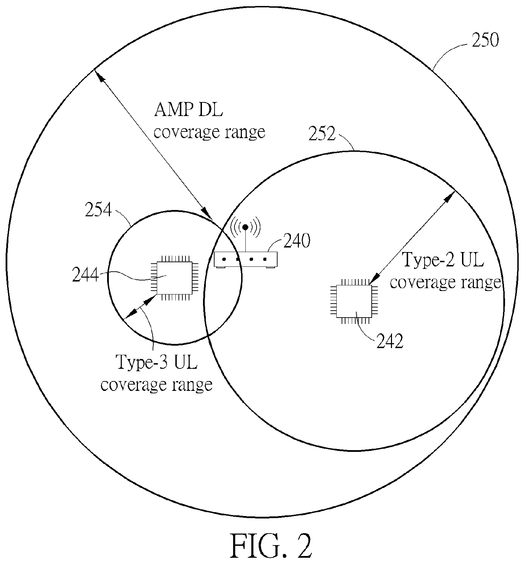

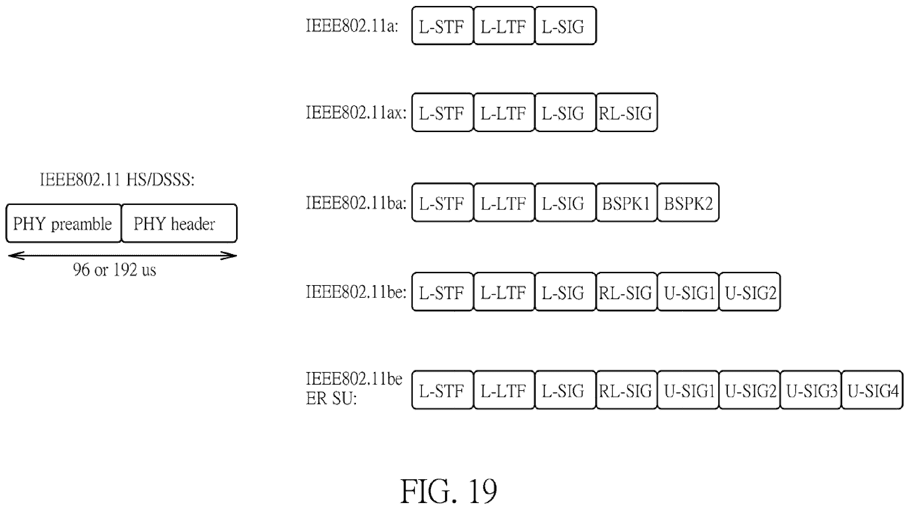

FIG. 2 is a diagram illustrating multiple coverage ranges for multiple transmissions according to an embodiment of the present disclosure, wherein an AMP AP 240 may be implemented by one of the wireless communication devices 100 and 200 shown in FIG. 1, and each of a type-2 AMP STA 242 and a backscattering-type AMP STA 244 may be implemented by another of the wireless communication devices 100 and 200. As shown in FIG. 2, a coverage range of the DL transmission (including the DL PPDU transmission and the CTS-to-Self frame transmission) performed by the AMP AP 240 may be denoted by "an AMP DL coverage range 250", a coverage range of the TB UL transmission performed by the type-2 AMP STA 242 may be denoted by "a type-2 UL coverage range 252", and a coverage range of the TB UL transmission performed by the backscattering-type AMP STA 244 may be denoted by "a type-3 UL coverage range 254". Under a condition that the CTS-to-Self mechanism is adopted, since either the type-2 AMP STA 242 or the backscattering-type AMP STA 244 is focus on low power devices or no power devices, both the type-2 UL coverage range 252 and the type-3 UL coverage range 254 are located within the AMP DL coverage range 250. In addition, due to the low power/no power storage characteristics of the type-2 AMP STA 242 and the backscattering-type AMP STA 244, the TB UL PPDU for the type-2 AMP STA 242 or the backscattering-type AMP STA 244 does not need to include a 20MHz spoofing preamble. In addition, since the DL PPDU includes the spoofing preamble, legacy devices can understand the spoofing preamble and does not contend the channel. Therefore, the collision is reduced. For an AMP PPDU, the spoofing preamble can be one of the formats shown in FIG.19 or other formats. The bandwidth of the spoofing preamble is wider than that of the AMP package in the AMP PPDU.

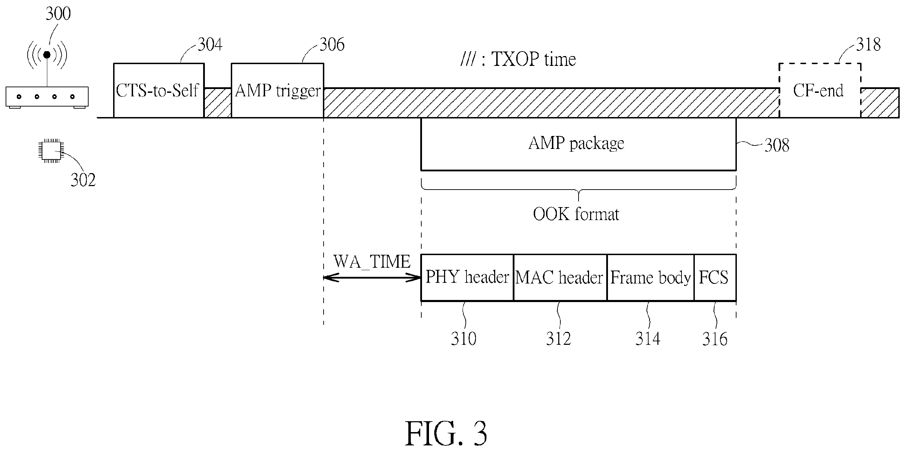

FIG. 3 is a diagram illustrating a frame exchange between an AMP AP 300 and an AMP STA 302 according to an embodiment of the present disclosure, wherein the AMP AP 300 may be implemented by one of the wireless communication devices 100 and 200 shown in FIG. 1, and the AMP STA 302 may be implemented by another of the wireless communication devices 100 and 200. As shown in FIG. 3, in the beginning, the AMP AP 300 may transmit a CTS-to-Self frame 304 in order to obtain a TXOP on a channel. Afterwards, the AMP AP 300 may transmit an AMP trigger 306 (e.g., a trigger frame) via the channel. This is for illustration only, and the present disclosure is not limited thereto. For example, the AMP trigger 306 may be included in an AMP package transmitted by the AMP AP 300, and the AMP trigger 306 may indicate the AMP STA 302 to perform the UL transmission.

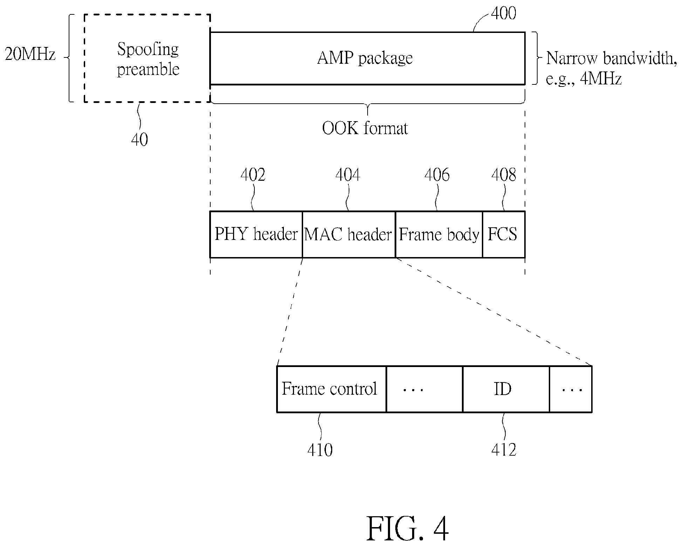

Specifically, refer to FIG. 4. FIG. 4 is a diagram illustrating a spoofing preamble 40 and an AMP package 400 transmitted from the AMP AP 300 to the AMP STA 302 according to an embodiment of the present disclosure, wherein the spoofing preamble 40 and the AMP package 400 may be included in a DL PPDU transmitted from the AMP AP 300 to the AMP STA 302. As shown in FIG. 4, the spoofing preamble 40 has a 20MHz bandwidth and an OFDM format, and the AMP package 400 has a narrow bandwidth (e.g., 4 MHz) and an OOK format, including a physical (PHY) header 402, an MAC header 404, a frame body 406, and a frame check sequence (FCS) 408, wherein the MAC header 404 may include a frame control field 410 and an identification (ID) field 412, and a client identifier (e.g., a STA ID) may be carried in the ID field 412. If the AMP package 400 contains a frame body, the MAC header 404 may include a frame body length field. It should be noted that, the MAC header 404 may include an indicator for indicating that the trigger frame (i.e., the AMP trigger 306) is carried in the AMP package 400. Specifically, the MAC header 404 may include a frame control field, and the frame control field may include the indicator, but the present disclosure is not limited thereto. In some embodiments, the PHY header 402 may also act as a trigger indicator. For example, a specific pattern of a synchronization (for brevity, hereinafter referred to as "sync") field in the PHY header 402 can be utilized to wake up an AMP STA and trigger the UL transmission of the AMP STA.

Refer back to FIG. 3. After receiving the trigger frame (i.e., the AMP trigger 306) from the AMP AP 300, the AMP STA 302 is required to wait for a wake-up time (labeled as "WA_TIME" in FIG. 3 for brevity) before performing the TB UL PPDU transmission, wherein an AMP package 308 may be included in the TB UL PPDU transmitted from the AMP STA 302 to the AMP AP 300. The AMP package 308 also adopts an OOK format, and the AMP package 308 includes a PHY header 310, an MAC header 312, a frame body 314, and an FCS 316. The PHY header 310 may be utilized to perform a sync operation of a reception side (i.e., the AMP AP 300) and a package detection of the reception side. It should be noted that, since a pattern of a sync field in the PHY header 402 of the AMP package 400 transmitted from the AMP AP 300 to the AMP STA 302 is different from that in the PHY header 310 in the AMP package 308 transmitted from the AMP STA 302 to the AMP AP 300, the PHY header 310 of the AMP package 308 may act as an UL transmission indicator for reception of the AMP AP 300. Afterwards, if any TB UL PPDU is not received by the AMP AP 300 for an estimation period, the AMP AP 300 may transmit a CF-end frame 318 for truncating or terminating the TXOP.

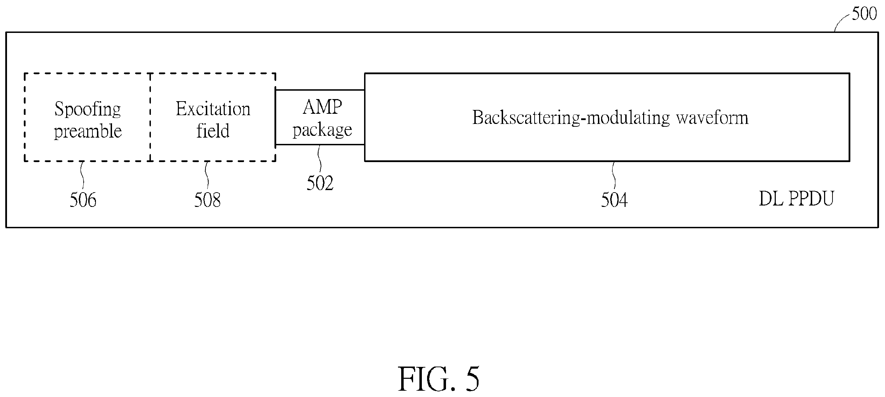

FIG. 5 is a diagram illustrating a DL PPDU 500 received by an AMP STA according to an embodiment of the present disclosure. For the backscattering mechanism, the type-3 AMP STA may use a received DL waveform as a carrier for generating a TB UL PPDU. As shown in FIG. 5, the DL PPDU 500 may at least include an AMP package 502 and a powering and/or backscatter-modulating waveform field 504, and may optionally include a spoofing preamble 506 and an excitation field 508. The waveform of the excitation field (the excitation field is also referred to as a excitation segment/section) 508 is used for providing the power for the type-3 AMP STA. If the powering and/or backscatter-modulating waveform field 504 is a powering field, the waveform of the powering field is used for providing the power for the type-3 AMP STA. If the powering and/or backscatter-modulating waveform field 504 is a backscatter-modulating waveform field, the waveform of the backscatter-modulating waveform field acts as a carrier, which is used by the AMP STA to perform a modulation for generating the TB UL PPDU, and the backscatter-modulating waveform field is also referred to as an excitation field. If the powering and/or backscatter-modulating waveform field 504 is a powering and backscatter-modulating waveform field, the waveform of the powering and backscatter-modulating waveform field is used for providing the power for the type-3 AMP STA, and acts as a carrier, which is used by the AMP STA to perform a modulation for generating the TB UL PPDU. In this case, the powering and backscatter-modulating waveform field is also referred to as an excitation field.

In an embodiment, the DL PPDU 500 may include the spoofing preamble 506, the excitation field 508, the AMP package 502, and the powering and/or backscatter-modulating waveform field 504. In some embodiments, the DL PPDU 500 may include the excitation field 508, the AMP package 502, and the powering and/or backscatter-modulating waveform field 504. In some embodiments, the DL PPDU 500 may include the AMP package 502 and the powering and/or backscatter-modulating waveform field 504. In some embodiments, the DL PPDU 500 may include the spoofing preamble 506, the AMP package 502, and the powering and/or backscatter-modulating waveform field 504. For example, the DL PPDU 500 may include the spoofing preamble 506, the AMP package 502 following the spoofing preamble 506, and the powering and/or backscatter-modulating waveform field 504 following the AMP package 502.

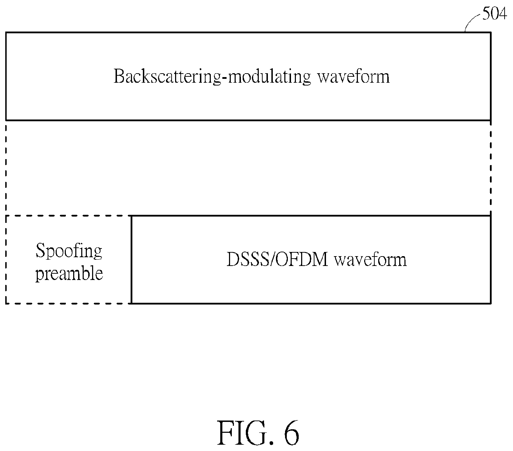

FIG. 6 is a diagram illustrating the powering and/or backscatter-modulating waveform field 504 of the DL PPDU 500 shown in FIG. 5 according to one embodiment of the present disclosure. As shown in FIG. 6, the powering and/or backscatter-modulating waveform field 504 may optionally include a spoofing preamble, depending upon actual design requirements. For example, if the spoofing preamble is not transmitted during the beginning of the transmission of the DL PPDU 500, the spoofing preamble can be transmitted in the powering and/or backscatter-modulating waveform field 504 in order for the third party STA not to contend the channel. In addition, for AMP UL backscatter modulation, the waveform of the powering and/or backscatter-modulating waveform field 504 may be a continuous wave (CW), a direct sequence spread spectrum (DSSS) waveform, or an OFDM waveform.

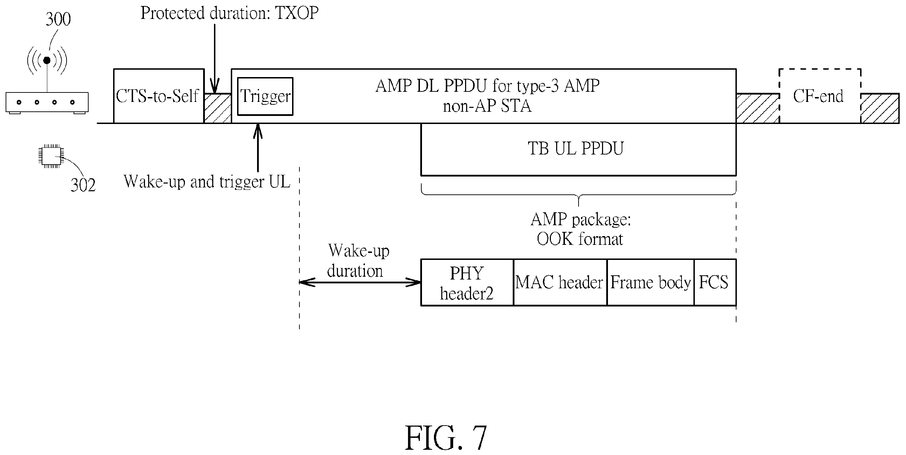

FIG. 7 is a diagram illustrating a frame exchange between the AMP AP 300 and the AMP STA 302 according to another embodiment of the present disclosure.

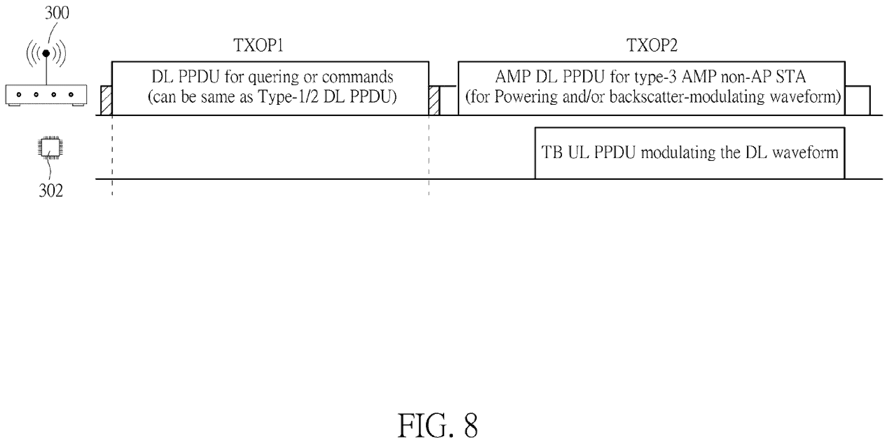

In some embodiments, the AMP AP just needs to collect specific information from the type-3 AMP non-AP STA by using the TB UL transmission. In this case, one TXOP is used. In some embodiments, the AMP AP needs to query or provide simple commands to the AMP type-3 non-AP STA. In this case, multiple TXOP may be required. FIG. 8 is a diagram illustrating a frame exchange between the AMP AP 300 and the AMP STA 302 according to still another embodiment of the present disclosure. As shown in FIG.8, in a first TXOP (labeled as "TXOP1" in FIG. 8), the AMP AP transmits a DL PPDU for querying or providing simple commands. In a second TXOP (labeled as "TXOP2" in FIG. 8), the AMP AP transmits an AMP DL PPDU for the type-3 AMP non-AP STA for providing the power to the type-3 AMP non-AP STA and providing a carrier to type-3 AMP non-AP STA. The DL PPDU for querying or providing commands can be the same as the type-1/2 DL PPDU without a trigger frame. The AMP DL PPDU for the type-3 AMP non-AP STA is designed to trigger the type-3 AMP non-AP STA to transmit a backscatter UL transmission.

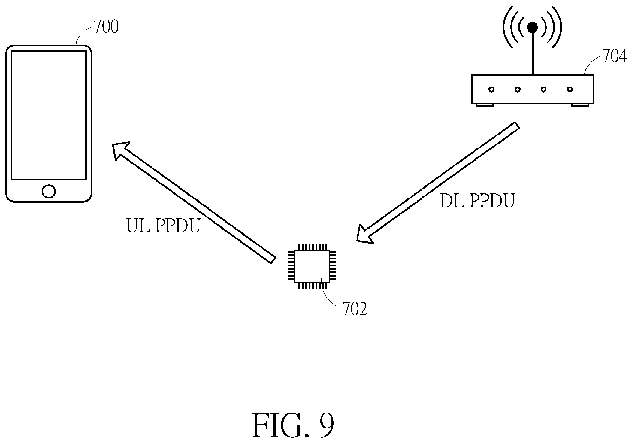

FIG. 9 is a diagram illustrating bi-static backscattering between an AMP AP 700, an AMP STA 702, and a backscattering source 704 according to an embodiment of the present disclosure, wherein the AMP AP 700 may be implemented by one of the wireless communication devices 100 and 200 shown in FIG. 1; the AMP STA 702 may be implemented by another of the wireless communication devices 100 and 200; and the backscattering source 704 may be an energizer, and may be a STA supporting the IEEE 802.11 11b standards and the OFDM waveform. The backscattering source 704 may transmit a DL PPDU to the AMP STA 702, and the AMP STA 702 may transmit a TB UL PPDU to the AMP AP 700.

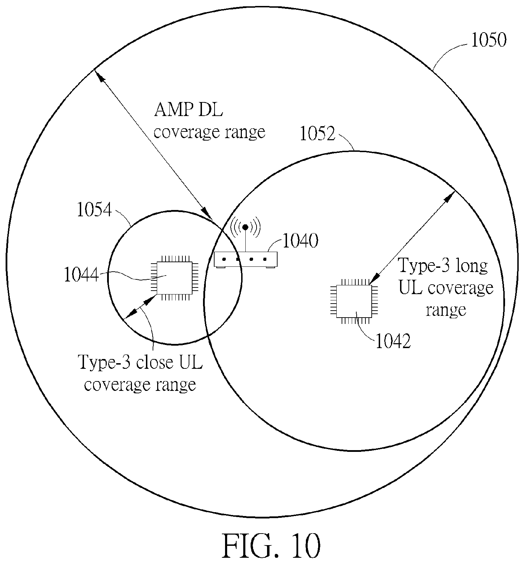

FIG.10 is a diagram illustrating multiple coverage ranges for different transmission according to an embodiment of the present disclosure, wherein an AMP AP 1040 may be implemented by one of the wireless communication devices 100 and 200 shown in FIG. 1, and each of a long-range backscattering-type AMP STA 1042 and a close-range backscattering-type AMP STA 1044 may be implemented by another of the wireless communication devices 100 and 200. As shown in FIG. 10, a coverage range of the DL transmission (including the DL PPDU transmission and the CTS-to-Self frame transmission) performed by the AMP AP 1040 may be denoted by "an AMP DL coverage range 1050", a coverage range of the TB UL transmission performed by the long-range backscattering-type AMP STA 1042 may be denoted by "a type-3 long UL coverage range 1052", and a coverage range of the TB UL transmission performed by close-range backscattering-type AMP STA 1044 may be denoted by "a type-3 close UL coverage range 1054". The type-2 AMP non-AP STAs are targeting for low power tag or STA applications, the type-3 AMP non-AP STAs are targeting for no or low power tag or STA applications, it is unlikely that they can perform the EDCA operation themself. It is proposed that the type-2 AMP non-AP STAs and the type-3 AMP non-AP STAs only conduct the trigger-based (TB) uplink (UL) transmission.

For the previous backscattering scheme, an AMP AP may transmit a DL PPDU including a trigger frame and receive a TB UL PPDU. For the bi-static backscattering scheme, the transmission of the DL PPDU to the type-3 AMP non-AP STA is performed by not the AMP AP 700 but the backscattering source 704. It should be noted that, a coverage range of the TB UL transmission performed by the long-range backscattering-type AMP STA 1042 in the bi-static backscattering scheme will be greater than that performed by the close-range backscattering-type AMP STA 1044 in the previous backscattering scheme, and will be located within the AMP DL coverage range 1050.

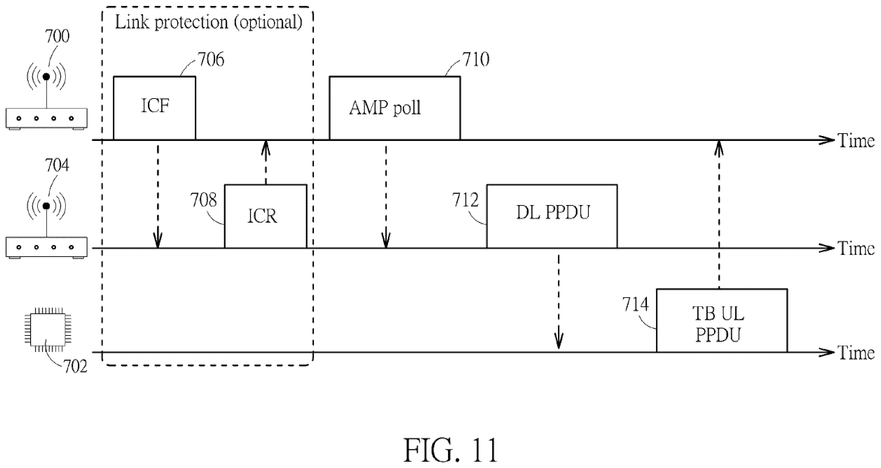

FIG. 11 is a diagram illustrating a frame exchange between the AMP AP 700, the AMP STA 702, and the backscattering source 704 shown in FIG. 9 according to an embodiment of the present disclosure. Since the backscattering source 704 can be a STA supporting the IEEE 802.11 11b standards and the OFDM waveform, the backscattering source 704 can support the RTS/CTS frame exchange mechanism. For optional link protection, the AMP AP 700 may transmit an Initial Control Frame (ICF) frame 706 (e.g., an RTS frame) to the backscattering source 704. In response to reception of the ICF frame 706, the backscattering source 704 may transmit an Initial Control Response (ICR) frame 708 (e.g., a CTS frame) to the AMP AP 700. Afterwards, the AMP AP 700 may initialize the AMP UL transmission, and more particularly, may poll the backscattering source 704 for indicating the backscattering source 704 to transmit a DL PPDU 712 including an UL carrier to the AMP STA 702. The backscattering source 704 responses the polling from the AMP AP 700 by sending an UL carrier to the AMP STA 702. For example, the AMP AP 700 may transmit an AMP poll frame 710 to the backscattering source 704. In response to the AMP poll frame 710 from the AMP AP 700, the backscattering source 704 may transmit the DL PPDU 712 to the AMP STA 702. The AMP STA 702 may modulate data or information of a TB UL PPDU 714 by using the UL carrier in the DL PPDU 712. It is worth to mentioned that the "AMP poll to energizer" can be applied by IEEE 802.11 a, b, n, ac, ax, be, and/or beyond PPDU formats.

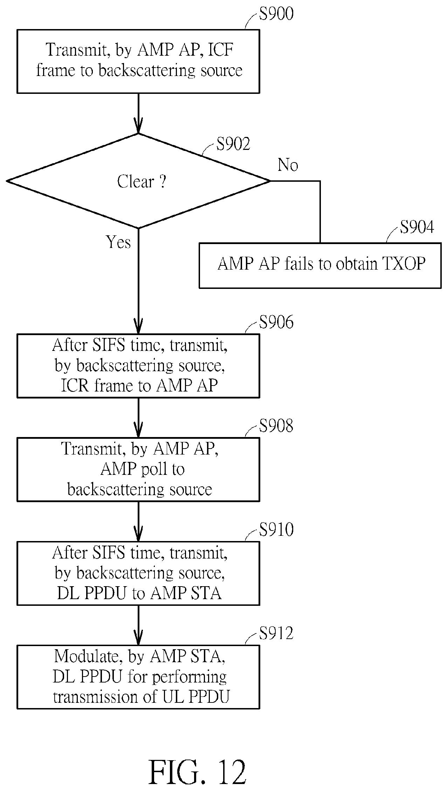

FIG. 12 is a flow chart of the frame exchange shown in FIG. 11 according to an embodiment of the present disclosure.

In Step S900, the ICF frame 706 is transmitted from the AMP AP 700 to the backscattering source 704. The ICF frame 706 may be an RTS frame.

In Step S902, it is determined whether a result of a clear channel assessment (CCA) of the backscattering source 704 is clear. If Yes, Step S906 is entered; if No, Step S904 is entered.

In Step S904, the ICR frame 708 from the backscattering source 704 will not be received by the AMP AP 700, and the AMP AP 700 fails to obtain the TXOP.

In Step S906, after waiting for a short interframe space (SIFS) time, the backscattering source 704 transmits the ICR frame 708 to the AMP AP 700.

In Step S908, the AMP AP 700 transmits the AMP poll frame 710 to the backscattering source 704. A transmitter address (TA) and a receiver address (RA) in the AMP poll frame 710 are the MAC address of the MAP AP 700 and the MAC address of the backscattering source 704, respectively.

In Step S910, after waiting for an SIFS time, the backscattering source 704 transmits the DL PPDU 712 to the AMP STA 702, wherein the DL PPDU 712 has UL carrier. The DL PPDU 712 carries an AMP polling frame with an OOK format. A transmitter address (TA) and a receiver address (RA) in the DL PPDU 712 are the MAC address of the backscattering source 700 and the MAC address of the AMP STA 702, respectively. The AMP polling frame includes a control frame, which is also referred to as a trigger frame.

In Step S912, the AMP STA 702 performs a modulation by using the UL carrier to generate the TB UL PPDU 714.

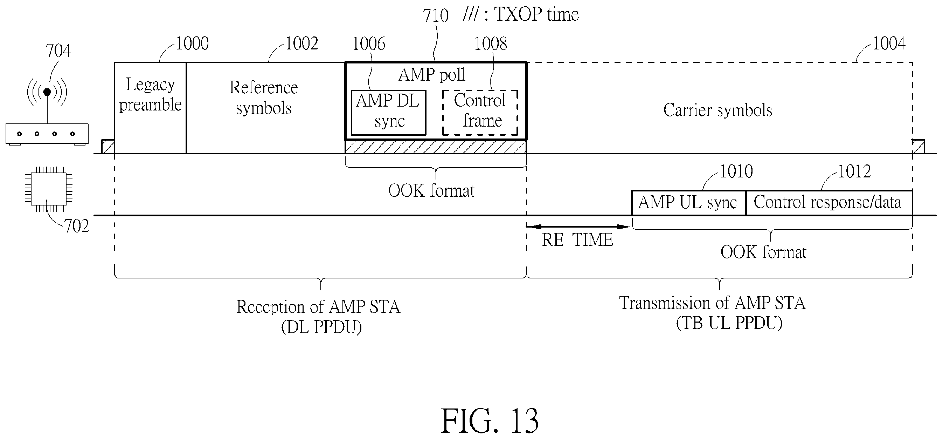

FIG. 13 is a diagram illustrating a PPDU format for the bi-static backscattering according to an embodiment of the present disclosure. As shown in FIG. 13, the reception and the transmission of an AMP STA can be condensed within a duration of DL PPDU. The DL PPDU includes a wideband preamble (e.g., a legacy preamble 1000), reference symbols 1002, an AMP polling frame, and carrier symbols 1004, wherein the AMP polling frame may adopt the OOK format, the AMP polling frame comprises a DL sync field 1006 and a control frame 1008, and DL sync field 1006 has a narrowband; The carrier symbols 1004 may be a power and/or backscatter-modulating waveform field. For the bi-static backscattering, when the backscattering source 704 transmits the DL PPDU 712 to the AMP STA 702, the DL PPDU 712 may be transmitted to the AMP AP 700 at the same time, which causes the AMP AP 700 to receive the interference from the backscattering source 704. As shown in FIG. 10, the DL PPDU 712 may include the legacy preamble 1000 with 20 MHz, the reference symbols 1002, and the AMP poll frame 710, and may optionally include the carrier symbols 1004. The reference symbols 1002 may be predetermined waveforms, and may be utilized by the AMP AP 700 to perform an interference estimation operation. The AMP poll frame 710 has an OOK format, and includes an AMP DL sync field 1006, wherein the AMP DL sync field 1006 may include timing information for the AMP STA 702 to decode the AMP poll frame 710. In addition, the AMP poll 710 may optionally include a control frame field 1008. For example, when a specific sync pattern (i.e., specific pattern of the AMP DL sync field 1006) is designed to trigger the UL transmission, the AMP poll 710 may not include the control frame field 1008.

The AMP STA 702 takes a certain time to reconfigure from a receiving (RX) mode to a transmitting (TX) mode. As a result, after receiving the DL PPDU 712 from the backscattering source 704, the AMP STA 702 is required to wait for a reconfiguration time (labeled as "RE_TIME" in FIG. 13 for brevity) before transmitting the TB UL PPDU 714 to the AMP AP 700. The TB UL PPDU 714 has an OOK format, including an AMP UL sync field 1010 and a control response/data field 1012. It should be noted that, the dedicated pattern of the AMP UL sync field of the TB UL PPDU 714 is different from the pattern of the AMP DL sync field 1006, and is applied for detecting an AMP UL packet.

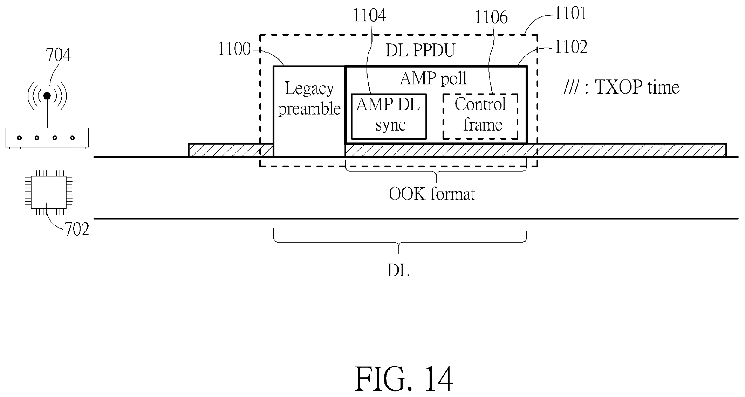

FIG. 14 is a diagram illustrating a DL PPDU format for the bi-static backscattering according to another embodiment of the present disclosure. Assume that the backscattering source 704 or the AMP AP only transmit a DL PPDU 1101 to the AMP STA 702 without requiring an UL response. The DL PPDU 1101 may include a legacy preamble 1100 with a wideband bandwidth and an AMP poll frame 1102, wherein the AMP poll frame 1102 adopts an OOK format, and includes an AMP DL sync field 1104 and a control frame field 1106. In this embodiment, the reference symbols are not included in the DL PPDU 1101.

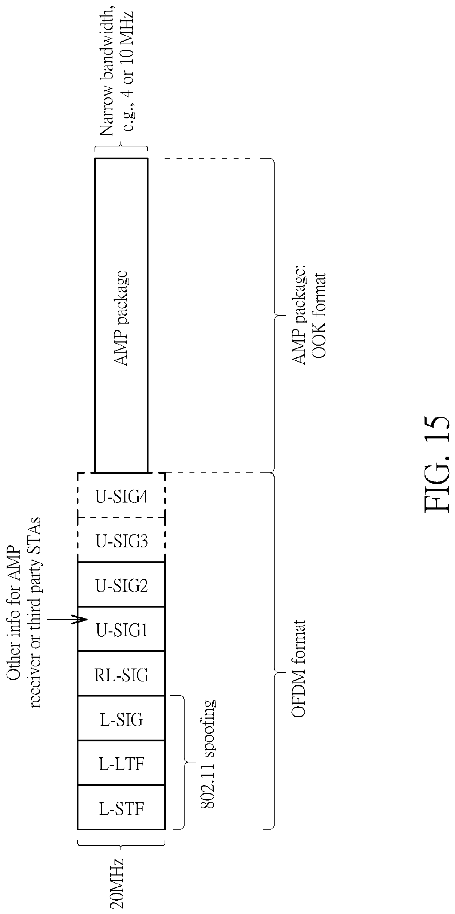

FIG. 15 is a diagram illustrating a DL PPDU format for the bi-static backscattering according to still another embodiment of the present disclosure.

The AMP DL PPDU can employ the preamble design in 11be (L-STF, L-LTF, L-SIG, RL-SIG, and U-SIGs), which provides additional information for 802.11be+ devices. An indicator may be added for the AMP DL PPDU in the legacy preamble with 20MHz. In an option 1, the indicator reuses U SIG reserved bits (i.e., Validate and Disregard bits). In an option 2, the indicator is indicated in a PHY version field (e.g. indicated in the reserved entry of the PHY version field), e.g., PHY version=7. Other information can also be carried in the U-SIGs for AMP DL reception, e.g., (1) an AMP PPDU type (2) an indicator for indicating the reference symbols is right after the legacy preamble. The indicator also indicates the length of the reference symbols.

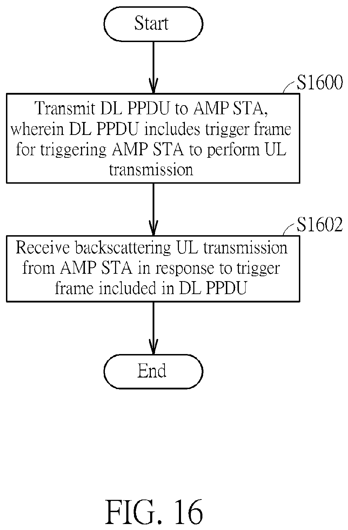

FIG. 16 is a flow chart of a wireless communication method according to an embodiment of the present disclosure. Provided that the result is substantially the same, the steps are not required to be executed in the exact order shown in FIG. 16. For example, the method shown in FIG. 16 may be employed by an energizer or an AMP AP. For better comprehension, the method may be illustrated with the flow shown in FIG. 16, but the present disclosure is not limited thereto. According to some embodiments, one or more steps may be added, deleted, or changed in the flow shown in FIG. 16.

In Step S1600, a DL PPDU is transmitted to an AMP STA, wherein the DL PPDU includes a trigger indication for triggering the AMP STA to perform an UL transmission. The trigger indication may be a trigger frame. The trigger indication may be a special pattern of sync field in PHY header in an AMP package in the DL PPDU.

In Step S1602, a backscattering UL transmission is received from the AMP STA in response to the trigger indication included in the DL PPDU.

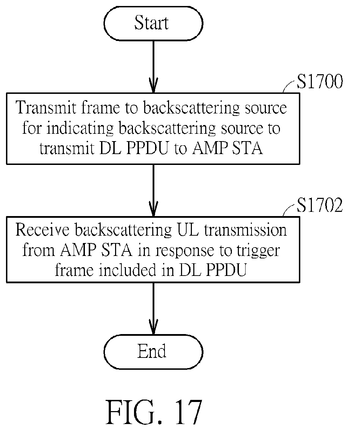

FIG. 17 is a flow chart of a wireless communication method according to another embodiment of the present disclosure. Provided that the result is substantially the same, the steps are not required to be executed in the exact order shown in FIG. 13. For example, the method shown in FIG. 17 may be employed by an AMP AP that is implemented by the wireless communication device 100/200 shown in FIG. 1. For better comprehension, the method may be illustrated with the flow shown in FIG. 17, but the present disclosure is not limited thereto. According to some embodiments, one or more steps may be added, deleted, or changed in the flow shown in FIG. 17.

In Step S1700, a frame is transmitted to a backscattering source for indicating the backscattering source to transmit a DL PPDU to an AMP STA.

In Step S1702, a backscattering UL transmission is received from the AMP STA in response to a trigger indication included in the DL PPDU. The trigger indication may be a trigger frame. The trigger indication may be a special pattern of sync field in PHY header in an AMP package in the DL PPDU.

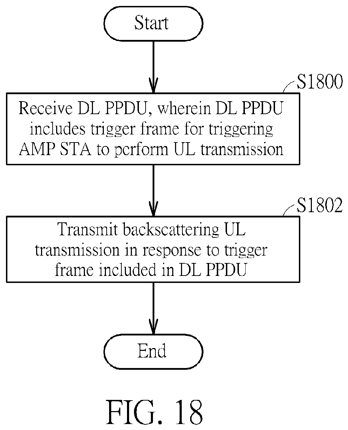

FIG. 18 is a wireless communication method according to still another embodiment of the present disclosure. Provided that the result is substantially the same, the steps are not required to be executed in the exact order shown in FIG. 18. For example, the method shown in FIG. 18 may be employed by an AMP STA that is implemented by the wireless communication device 100/200 shown in FIG. 1. For better comprehension, the method may be illustrated with the flow shown in FIG. 18, but the present disclosure is not limited thereto. According to some embodiments, one or more steps may be added, deleted, or changed in the flow shown in FIG. 18.

In Step S1800, a DL PPDU is received, wherein the DL PPDU includes a trigger indication for triggering the AMP STA to perform an UL transmission. The trigger indication may be a trigger frame. The trigger indication may be a special pattern of sync field in PHY header in an AMP package in the DL PPDU.

In Step S1802, a backscattering UL transmission is transmitted in response to the trigger indication included in the DL PPDU.

FIG. 19 is a diagram illustrating formats of a spoofing preamble according to an embodiment of the present disclosure. As shown in FIG. 19, for the IEEE 802.11 high rate (HR)/direct sequence spread spectrum (DSSS), a total length of a PHY preamble and a PHY header may be 96 microseconds (µs) or 192 µs. For the IEEE 802.11 11a standard, a spoofing preamble may include a legacy short training field (L-STF), a legacy long training field (L-LTF), and a legacy signal field (L-SIG). For the IEEE 802.11 11ax standard, a spoofing preamble may include an L-STF, an L-LTF, an L-SIG, and a repeated legacy signal field (RL-SIG). For the IEEE 802.11 11ba standard, a spoofing preamble may include an L-STF, an L-LTF, an L-SIG, a Binary Phase Shift Keying 1 field (BSPK1), and a Binary Phase Shift Keying 2 field (BSPK2). For the IEEE 802.11 11be standard, a spoofing preamble may include an L-STF, an L-LTF, an L-SIG, an RL-SIG, a universal signal 1 field (U-SIG1), and a universal signal 2 field (U-SIG2). For the IEEE 802.11 11be extended range (ER) single user (SU) standard, a spoofing preamble may include an L-STF, an L-LTF, an L-SIG, an RL-SIG, a U-SIG1, a U-SIG2, a universal signal 3 field (U-SIG3), and a universal signal 4 field (U-SIG4).

In summary, by the methods of the present disclosure, the PPDU UL and DL techniques and related protocol designs can be applied to the backscattering-type AMP STA and the AMP AP, and can also be applied to the bi-static backscattering between the backscattering source, the backscattering-type AMP STA, and the AMP AP.

## Claims

1. A wireless communication method, **characterized by**:
transmitting, by a device (100, 200), a downlink (DL) physical layer protocol data unit (PPDU) (712) to an ambient power (AMP) non-access point (AP) station (STA) (100, 200), wherein the DL PPDU (712) comprises a trigger indication for triggering the AMP non-AP STA to perform an uplink (UL) transmission; and
receiving, by the device, a backscattering UL transmission from the AMP non-AP STA in response to the trigger indication in the DL PPDU (712).

2. The wireless communication method of claim 1, further **characterized by**:
receiving, by the device, report information from the AMP non-AP STA, wherein the report information indicates a type of the AMP non-AP STA, wherein the AMP non-AP STA is a backscattering-type AMP non-AP STA.

3. The wireless communication method of any one of claims 1 or 2, **characterized in that** the DL PPDU (712) further comprises a backscatter-modulating waveform field (504), a waveform of the backscatter-modulating waveform field is utilized by the AMP non-AP STA to generate the backscatter UL transmission, wherein the waveform of the backscatter-modulating waveform field is a direct sequence spread spectrum (DSSS) waveform or an orthogonal frequency division multiplexing (OFDM) waveform.

4. The wireless communication method of any one of claims 1 to 3, **characterized in that** the backscatter-modulating waveform field is an excitation field (508) utilized for providing a power for the AMP non-AP STA.

5. The wireless communication method of any one of claims 1 to 4, **characterized in that** the DL PPDU further comprises an excitation field before an AMP package comprising the trigger indication or after the AMP package, and the excitation field is utilized for providing a power for the AMP non-AP STA.

6. The wireless communication method of any one of claims 1 to 5, **characterized in that** each of the DL PPDU and the backscattering UL transmission comprises an AMP package (308, 400, 502); the AMP package utilizes an on-off keying (OOK) format, the AMP package (400, 502) comprised in the DL PPDU carries the trigger indication.

7. The wireless communication method of any one of claims 1 to 6, **characterized in that** the AMP package comprises a physical (PHY) header (402), a media access control (MAC) header (404), and a frame body (406), wherein the trigger indication (306) is a trigger frame, and an indicator is carried in an MAC header of the AMP package (400, 502) in the DL PPDU for indicating that the trigger frame is carried in the AMP package in the DL PPDU, wherein a pattern of a synchronization (sync) field (1006) in the PHY header in the AMP package comprised in the DL PPDU is different from a pattern of a sync field (1010) in the PHY header in the AMP package (308) comprised in the backscattering UL transmission, wherein the pattern of the sync field in the PHY header in the AMP package comprised in the backscattering UL transmission acts as an UL transmission indicator.

8. The wireless communication method of any one of claims 1 to 7, further **characterized by**:
transmitting, by the device, a clear to send (CTS)-to-self frame (708) in order to obtain a transmission opportunity (TXOP) before transmitting the DL PPDU to the AMP non-AP STA; and
in response to any UL PPDU not being received for an estimation period, transmitting, by the device, a frame to truncate or terminate the TXOP.

9. The wireless communication method of any one of claims 1 to 8, **characterized in that** the backscattering UL transmission is a trigger-based PPDU.

10. The wireless communication method of any one of claims 1 to 9, further **characterized by**: receiving a frame from an AMP AP, wherein the frame indicates the device to transmit the DL PPDU, and the device is an energizer.

11. The wireless communication method of any one of claims 1 to 10, **characterized in that** the DL PPDU further comprises a legacy preamble (1000) located at a beginning of the DL PPDU and reference symbols (1002) located after the legacy preamble and before the trigger indication, and the reference symbols are utilized for estimating an interference from the device.

12. A wireless communication method, **characterized by**:
transmitting, by an ambient power (AMP) access point (AP) (100, 200), a frame to a backscattering source for indicating the backscattering source to transmit a downlink (DL) physical layer protocol data unit (PPDU) (712) to an AMP non-AP station (STA) (100, 200); and
receiving, by the AMP AP, a backscattering uplink (UL) transmission in response to a trigger indication comprised in the DL PPDU, from the AMP non-AP STA.

13. A wireless communication method, **characterized by**:
receiving, by an ambient power (AMP) non-access point (AP) station (STA) (100, 200), a downlink (DL) physical layer protocol data unit (PPDU) (712), wherein the DL PPDU comprises a trigger indication for triggering the AMP non-AP STA to perform an uplink (UL) transmission; and
transmitting, by the AMP non-AP STA, a backscattering UL transmission to an AMP AP in response to the trigger indication comprised in the DL PPDU.

14. The wireless communication method of claim 13, further **characterized by**:
transmitting, by the AMP non-AP STA, report information, wherein the report information indicates that a type of the AMP non-AP STA is a backscattering-type AMP non-AP STA;
wherein the DL PPDU is from the AMP AP or an energizer; and when the DL PPDU is from the energizer, the DL PPDU is transmitted from the energizer based on an indication from an AMP AP.

15. The wireless communication method of any one of claims 13 or 14, **characterized in that** the DL PPDU further comprises a backscatter-modulating waveform field (504), a waveform of the backscatter-modulating waveform field is utilized by the AMP non-AP STA to generate the backscatter UL transmission, and the backscatter-modulating waveform field is an excitation field (508) for providing a power for the AMP non-AP STA.
